# EUROPEAN PATENT SPECIFICATION

(11) **EP 2 441 577 B1**
(45) Date of publication and mention of the grant of the patent: **15.05.2013**
(21) Application number: 10187554.0
(22) Date of filing: 14.10.2010
(51) Int. Cl.: B32B 3/20, G09F 3/02

(54) **In-mold label and method for producing the same**
Blasformetikett und Herstellungsverfahren dafür
Étiquette dans le moule et son procédé de production

(43) Date of publication of application: 18.04.2012
(73) Proprietor: NAN YA PLASTICS CORPORATION, Taipei (TW)
(72) Inventor: Lin, Allen F.C., Taipei (TW); Cheng, Hong Kuo, Taipei (TW)
(74) Representative: Viering, Jentschura & Partner

(56) References cited:
- JP-A- 2009 006 667
- JP-A- 2009 190 338
- US-A- 5 254 302

## Description

### BACKGROUND OF THE INVENTION

### 1. Field of the Invention

The instant disclosure relates to an in-mold label and its producing method, more particularly to the in-mold label with a heat-sealable resin layer of a plurality of interlaced and continuous-arranged micro-protrusions.

### 2. Description of Related Art

Generally, if a picture or text needs to be printed on a bottle or surface of any article, a label with sticker is usually adapted to sticking the label with the article. In the process of sticking, some annoying blisters may stay inside the label if the blisters are not effectively driven out. Also, those inside blisters may cause the label easily to fall off.

Nevertheless, a kind of in-mold label has been developed in the conventional technology. In the process of producing a container or any product, one process selected from an injection molding, a blow molding, a differential pressure molding, and a foam molding is introduced therefor. In the process, a dry-type hot-melt adhesive is processed on the back side in advance. After a printing process, the glued label is fed and adhered to a specified position in a mold. The adhered label is with the forming plastics and formed in one piece in the mold. Further, the prepared dry-type hot-melt adhesive is adhered to the article or container. These described steps allow the thermoplastic label material with the printed picture or/and text to be embossed on the surface of any product. So that, the label is united with the product. For example, the kind of in-mold label is applicable to any surface of bottle for illustrating the product. Example of the in-mold label may not have problem of adhering the traditional label onto the product's surface since the label conventionally uses paper or the like materials.

Some conventional technologies are known to develop the methods to produce the in-mold label. The label may be usually made of paper or other like materials such as polypropylene or polystyrene. Fig. 1 shows a lateral view of an in-mold label disclosed in the specification of U.S. Patent No. 6,551,671.

Example of the multi-layer structure of the in-mold label 10 is schematically shown in the figure. A substrate is a base layer 12 which is made of thermoplastic resin material. The upper surface of the structure is printed matter 13, which is the surface where the picture or text is printed thereon. The lower surface of base layer 12 is a heat-sealable resin layer 14. In one case, the surface 15 of the heat-sealable resin layer 14 has holes which are used for create the protrusions. Therefore, the blisters may be exhausted as fabricating the label and surface of product.

The mentioned heat-sealable resin layer 14 is formed as the heat-sealed layer on the product's surface, and the protrusions including top parts and bottom parts are useful to exhaust the blisters as fabrication. The related conventional technology can be referred to U.S. Patent No. 5,254,302 which disclosed the surface structure of in-mold label as shown in Fig. 2.

The shown adhesive layer 20 is formed as a lattice pattern on the surface of a heat-sealable resin layer. The layer 20 includes the top part 22 and valley part 24. The top part 22 and the valley part 24 form the paths to exhaust the blisters when the layer is sealed on a surface. After that, the adhesive layer 20 may be completely sealed on the surface while the top part 22 and the valley part 24 disappear.

### SUMMARY OF THE INVENTION

An in-mold label with heat-sealable resin layer having interlaced and continuous-arranged micro-protrusions is disclosed. In an example, the plural interlaced and continuous-arranged micro-protrusions provide multiple directional paths to exclude the air while the in-mold label is fabricated with an article. It featured that the described micro-protrusions effectively prevent the unnecessary blisters, and the in-mold label can be well sealed onto the article's surface.

Example of the in-mold label particularly includes a substrate made of thermoplastic resin material. Picture or text is preferably printed on one surface of a printed layer for presenting the printed content on the article. A heat-sealable resin material is then applied onto the other surface of substrate. In particular, the interlaced and continuous-arranged micro-protrusions are formed on the surface of heat-sealable layer by an embossing process. Therefore, a plurality of exhausting paths are formed. The micro-protrusions effectively exclude the blisters as fabricating the in-mold label onto a surface. The label can be well sealed on the surface of an article.

The method for producing the in-mold label has a first step of preparing a substrate with thermoplastic resin material, and an embossing apparatus having surface structure. The substrate is then conducted with an embossing process using the embossing apparatus. For example, a roller having surface structure is used to conduct the embossing process. The heat-sealable resin material is used to form the interlaced and continuous-arranged micro-protrusions. The printed layer, the thermoplastic resin substrate, and the heat-sealable resin layer are fabricated as the in-mold label.

According to one of the embodiments, the thickness of the in-mold label is about 60 micrometer to 120 micrometer. The density range of the apparatus is from 0.50 to 1.05 g/cm³. The interlaced and continuous-arranged micro-protrusions form the multiple types of interlaced and continuous-arranged holes, which are with depths from 8 micrometer to 14 micrometer, spacings there-among are from 10 micrometer to 1000 micrometer, and diameters are from 1000 micrometer to 1600 micrometer.

Table 1, according to an experiment, demonstrates the claimed in-mold label having interlaced and continuous-arranged micro-protrusions provides more efficient exhausting performance than the conventional technologies.

| prior arts items | R.O.C.(TW) 290674 (Jan, 1996) | U.S./EP PCTJP0105105 (Jun,2001) | U.S. 6551685 (Jun, 2001) | present invention |
|---|---|---|---|---|
| depth (µm) | 1∼8 | 0.5∼5 | 5∼10 (dotted) | 8∼14 |
| spacing (µm) | 1016∼5080 | N/A | 4000 | 10∼1000 |
| Hole diameter (µm) | N/A | 50∼1000 | 60∼100 | 1000∼1600 |

These and other various advantages and features of the instant disclosure will become apparent from the following description and claims, in conjunction with the appended drawings.

### BRIEF DESCRIPTION OF THE DRAWINGS

Fig. 1 schematically shows a diagram of lateral side of conventional in-mold label;

Fig. 2 shows a schematic diagram describing the surface of the conventional in-mold label;

Fig. 3A shows a schematic diagram of the surface of in-mold label of one embodiment in accordance with the present invention;

Fig. 3B shows the surface of in-mold label in second embodiment of the present invention;

Fig. 3C schematically shows the micro-protrusion of the surface of in-mold label in accordance with the present invention;

Fig. 4 schematically shows the in-mold label produced by a roller imprint process in accordance with the present invention;

Fig. 5 is a flow chart illustrating the method for producing the in-mold label in accordance with the present invention;

Fig. 6 is a schematic diagram of a system for producing Biaxial-Oriented Polypropylene pearl synthetic paper and transparent film in accordance with the present invention.

### DETAILED DESCRIPTION OF THE PREFERRED EMBODIMENTS

In view of the problem resulting in the poor adhesion while the blisters are produced as the conventional in-mold label is adhered with an article. In the present invention, provided is an in-mold label with a heat-sealable resin layer having interlaced and continuous-arranged micro-protrusions. The interlaced and continuous-arranged micro-protrusions allows the in-mold label is well adhered onto an article. Furthermore, according to the experiments, the micro-protrusions provide more efficient effect of blister-exhausting than the conventional technologies.

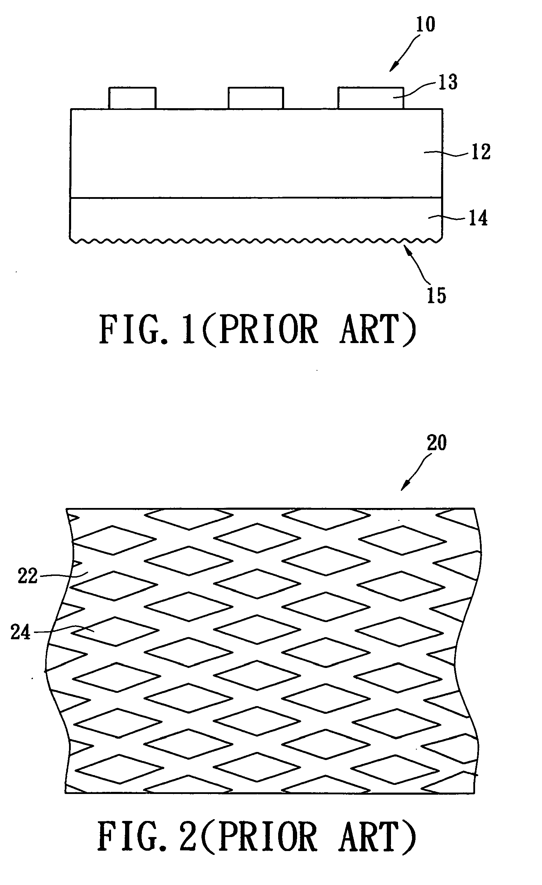

Reference is made to Fig. 1 describing the main structure of an in-mold label. Example of the in-mold label includes a substrate which is preferably a base layer made of thermoplastic resin material. A first surface and a second surface are respectively represent the top surface and the bottom surface of the substrate. The substrate is properly a thermoplastic resin film substrate, which has plastic property after a heating process, for conveniently combining with an article.

Further, a printed layer is formed on the first layer. The printed layer is used for showing a printed content. Any printed material is used to print content on the printed layer, including the picture or text. The second surface of substrate has a heat-sealable resin layer. Through an embossing process, interlaced and continuous-arranged micro-protrusions are formed on the layer. One of the objectives is to form multiple paths in order to effectively exhausting the blisters.

According to one of the embodiments, in the process of producing the in-mold label, the embossing materials, such as thermoplastic resin, are prepared by a heating process. Next, a roller imprinting or a plate pressing is used to perform the embossing to form holes on the surface. After a proper cooling procedure, the holes are patterned to form the in-mold label. Other surface, rather than the above described holed surface, of the in-mold label is provided for printing picture or text.

The holed surface is used to combine with the surface of article. In particular, the holes drive the blisters out by means of vacuuming or embossing method. As a result, the in-mold label can be well sealed with the surface of article without uneven adhesion and blistering.

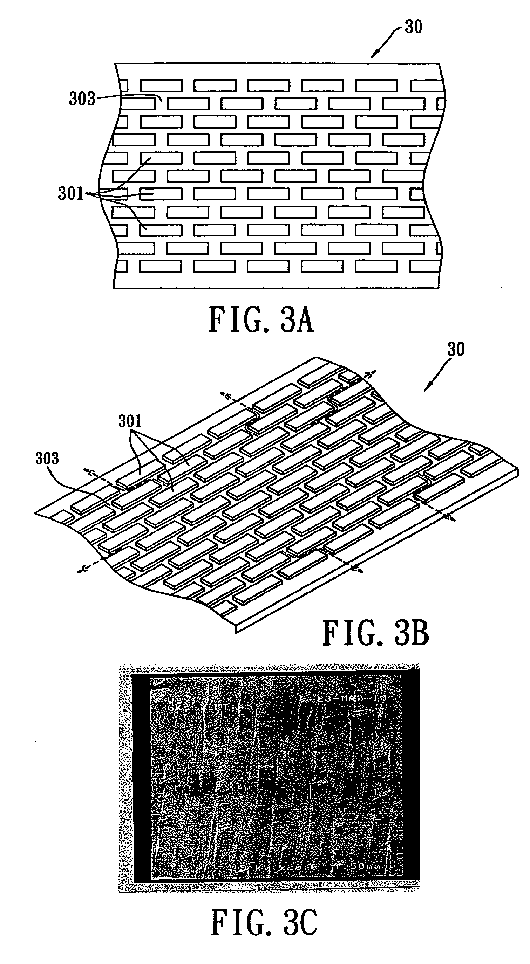

Fig. 3A shows one of schematic diagrams of surface structure of the in-mold label in accordance with the present invention. A surface 30 of the in-mold label is shown. In this schematic diagram, the top part 301 is presented as nearly rectangular form. The rest part is plane 303. Those top parts 301 are interlaced and continuous-arranged micro-protrusions.

Fig. 3B perspectively shows the surface structure in another schematic diagram. The top parts present the protrusions 301 on the surface 30 of in-mold label. The protrusions 301 are interlaced and continuous-arranged.

Further reference is made to Fig. 3C, which is taken from an actual image using microscope, showing the exhausting holes of surface structure of an in-mold label in accordance with the present invention. It appears the plurality of interlaced and continuous-arranged micro-protrusions. The top parts form the blister-exhausting paths shown as the dotted lines in Fig. 3B. While the in-mold label is combined with the surface of article, the exhausting paths provided by the interlaced and continuous-arranged micro-protrusions may effectively exclude the blisters. So that the in-mold label may be sealed with the surface well.

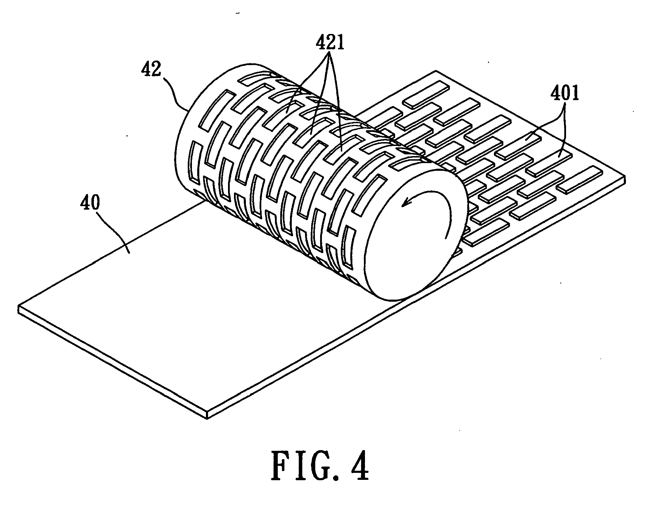

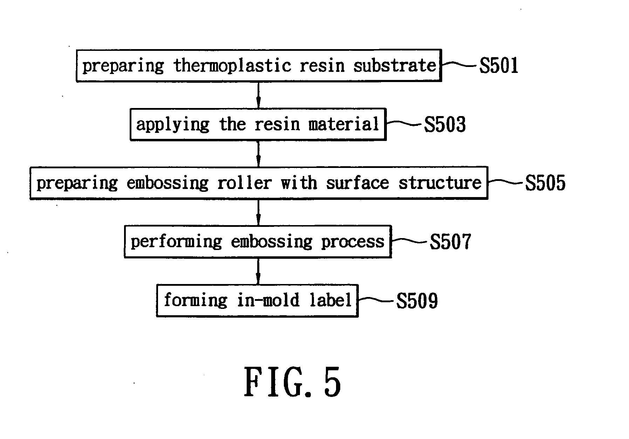

Fig. 4 shows a diagram using a roller embossing process to produce the in-mold label with the interlaced and continuous-arranged micro-protrusions. The surface of the shown embossing roller 42 includes surface structure 421, thereby the heat-sealable resin material 40 is embossed to produce the interlaced and continuous-arranged micro-protrusions, such as the surface texture 401 shown in the figure. The relevant procedure can be referred to producing steps described in Fig. 5. The producing process in one embodiment may refer to R.O.C Patent No. TW526136 (App. No. 088113590, Applicant: Nan-Ya Plastics Corporation). TW526136 describes a method for producing a polypropylene pearl synthetic paper or transparent film with three-layer co-extrusion biaxial-stretching for the in-mold label.

In step S501, a substrate material, for example the thermoplastic resin material, is prepared firstly.

In step S503, the thermoplastics resin material is applied onto the substrate for forming a heat-sealable resin layer, which is preferably the heat-sealable layer for in-mold label. The next step S505 in the method is to prepare the embossing roller with surface structure.

The step S507 in the method is to perform a heating process, embossing and cooling process. The plural interlaced and continuous-arranged micro-protrusions are then formed on the heat-sealable resin layer. At last step S509 in the method, the printed layer, and the thermoplastic resin substrate are combined with the heat-sealable resin layer, and to form the in-mold label.

In an example, the mentioned thermoplastic resin substrate is prepared by performing an extrusion process using an extrusion machine. The thermoplastic resin material is combined with the heat-sealable resin layer at the same time, or alternatively the heat-sealable resin layer is combined afterward. The combination process allows the material to be a useful type by extrusion. After the extrusion process, the substrate is under a cooling process through a cooling-molding wheel apparatus. In particular, the surface structure of substrate may be changed by heating and stretching its material.

For example, a longitudinal stretching process and a transverse stretching process are configured to produce the surface structure of the heat-sealable layer. A corona-treatment apparatus is then used to perform a corona-treatment process in order to change its physics property under a surface treatment. In practice, the in-mold label is applicable to printing, coating, gluing, laminating, or other process.

In the preferred embodiment, the total thickness of the in-mold label is from 60 micrometer to 120 micrometer. The density of the whole label is from 0.50 to 1.05 g/cm³. The interlaced and continuous-arranged micro-protrusions form the various types of interlaced and continuous-arranged holes. Preferably, the depth range of hole is from 8 micrometer to 14 micrometer. The spacing among holes is around 10 micrometer or 1000 micrometer. Further, diameter for each micro-production is from 1000 micrometer to 1600 micrometer.

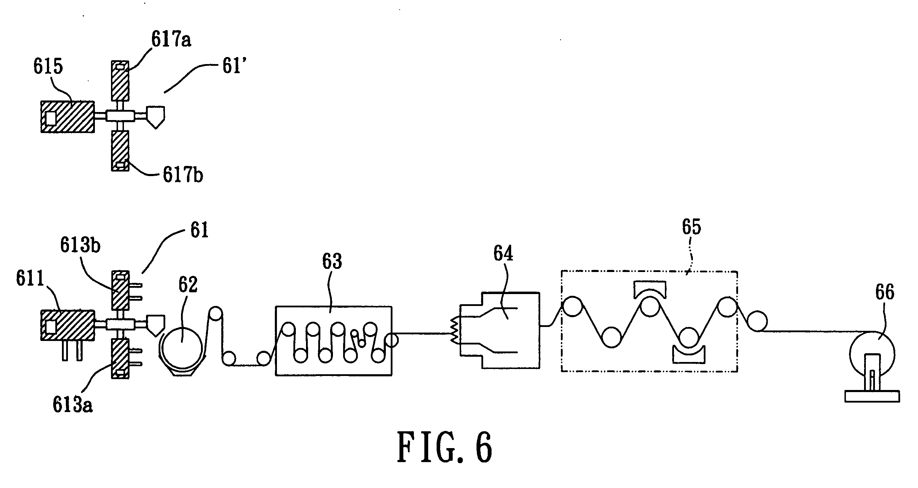

Fig. 6 shows a flow chart illustrating the method for producing the substrate of claimed in-mold label. In particular, the method adopts a production system of biaxial-oriented polypropylene pearl synthetic paper and a transparent film. In this case, the in-mold label includes three layers, which are produced by a three-layer co-extrusion process. The main component of material therefor is polypropylene. However, the following, but not limited to, discloses one of the embodiments in accordance with the present invention.

In the process of producing the claimed in-mold label, a co-extrusion process is particularly used to produce a thermoplastic resin substrate. Reference is made to the following embodiment and in view of the production system in Fig. 6.

A producing method for the biaxial-oriented polypropylene pearl synthetic paper and transparent film is introduced into the production of the in-mold label. The preferred embodiment of the in-mold label adopts three-layer structure. In one of the embodiments, the three-layer structure can be implemented as mist-surface layer/foaming-middle layer/adhesive layer, smooth-surface layer/foaming-middle layer/adhesive layer, or resin layer/resin layer/adhesive layer. In which, the adhesive layer may adopt the material such as PP, LPPE, or HDPE, which is applicable to the specific material of bottle such as PP, LPPE, or HDPE. As a result, the in-mold label can be combined with the bottle in a mold with bottle blow or injection forming process in one piece, especially by a chemical bonding.

The front-end of the system shown in the diagram includes the extrusion machines 61, 61'. The numeral 61 denotes an exhaustion-type twin-screw extrusion machine with a side-feeding device which is used to produce the pearl synthetic paper. This extrusion machine 61 preferably includes an exhaustion-type twin-screw primary extruder 611 and two exhaustion-type twin-screw secondary extruders 613a, 613b with a side-feeding device. The temperature condition is configured by referring to the combination of resin materials, MFI (melt flow index), degree of crystallization, speed of production line, and product thickness. More particularly, after the extrusion and stretching process, an embossing apparatus, such as embossing roller, with specific surface structure performs an embossing process. The interlaced and continuous-arranged hole structure is formed on the heat-sealable resin layer of in-mold label. The relevant embodiments can be referred to Figs. 3A to 3C.

According to another embodiment, a single-screw extrusion machine 61' for producing the transparent film is also used. This extrusion machine 61' includes a single-screw primary extruder 615 and two single-screw secondary extruders 617a, 617b. The temperature configuration is based on the various material types, MFI, degree of crystallization, speed of production line, and product thickness.

When the material undergoes the extrusion forming by the extrusion machine 61, 61' and heating process, a cooling process is then performed through a cooling-molding wheel apparatus 62. This cooling process may also be performed by a water-cooled or air-cooled machine, which is used to cool down the materials under the heating and co-extrusion processes. More particularly, the temperature under the cooling process should be well controlled, and pertinent to the further procedures. In practice, the temperature is adjustable and configured to comply with the thickness of the label's material, such as the thermoplastic resin, and the speed of production line.

After the cooling process, the label is initially formed. After that, the substrate is fed to a longitudinal stretching apparatus 63 for performing the longitudinal stretching process. Similarly, the related temperature related to the thickness of the substrate and the speed of production line is configured to preheat the substrate. The material of substrate is then softened. Next, the substrate is proceeding as two stages of stretching processes including a low speed stretching and a high speed stretching. As a result, the in-mold label is endowed with longitudinal strength, and then annealed and shaped.

The material undergoing the longitudinal stretching is further fed to a transverse stretching apparatus 64 for performing the transverse stretching process. The method is to preheat and soften the thinner material as undergoing the previous longitudinal stretching process. The temperature is reasonably configured as referring to the thickness of material and the speed of production line. After this transverse stretching process, the label is again annealed and shaped. Preferred to the example of the label, such as the pearl synthetic paper, the label partially shrinks in order to strengthen the structure for complying with specified requirements.

After the label is formed, a corona-treatment apparatus 65 may be incorporated to perform a corona-treatment process. This process can improve the physical properties of the surface of pearl synthetic paper and the transparent film in order to be applicable to further printing, coating, gluing, and adhering processes. The surface may reach a required wetting tension by specifying a processing power performed by a high-frequency discharging apparatus. This discharging apparatus is conducted to process single or double treatment thereon according to the speed of production line.

At last, the in-mold label is formed through a roll-up apparatus 66 after the mentioned corona-treatment process. One of the embodiments in accordance with the present invention is to roll up the pearl synthetic paper with a specific width using a metal tube. The product may be slit, cut, rolled up, or sliced as required.

To sum up, provided is the in-mold label and its producing method. The method is particularly to emboss the heat-sealable layer of the label to form the interlaced and continuous-arranged micro-protrusions. This heat-sealable resin layer is contributive to exhaust the blisters as combining the in-mold label with a specific article.

While the above description constitutes the preferred embodiment of the instant disclosure, it should be appreciated that the invention may be modified without departing from the proper scope or fair meaning of the accompanying claims. Various other advantages of the instant disclosure will become apparent to those skilled in the art after having the benefit of studying the foregoing text and drawings taken in conjunction with the following claims.

## Claims

1. An in-mold label, comprising:
a substrate;
a printed layer, formed on a first surface of the substrate for displaying printed content;
a heat-sealable layer, formed on a second surface of the substrate (30), wherein the heat-sealable layer comprises a plurality of interlaced and continuous-arranged micro-protrusions (301), wherein the micro-protrusions are formed by various interlaced and continuous-arranged holes, for forming a plurality of blister-exhausting paths formed on the heat-sealable layer by a heating-embossing-cooling process ;
wherein, while the in-mold label is combined with surface of an article, the interlaced and continuous-arranged micro-protrusions formed by various interlaced and continuous-arranged holes on the heat-sealable layer effectively exhaust the blisters.

2. The in-mold label of claim 1, wherein the substrate is a base layer made of a thermoplastic resin material.

3. The in-mold label of claim 1, wherein the heat-sealable layer is made of a thermoplastic resin material.

4. The in-mold label of claim 3, wherein the interlaced and continuous-arranged micro-protrusions (401) are formed by the heating-embossing-cooling process using a roller (42) with surface structure (421).

5. The in-mold label of claim 1, wherein the in-mold label is with a thickness of from 60 micrometer to 120 micrometer, and with a density of from 0.50 g/cm³ to 1.05 g/cm³.

6. The in-mold label of claim 1, wherein the hole has a depth of from 8 micrometer to 14 micrometer.

7. The in-mold label of claim 6, wherein spacing among the holes is from 10 micrometer to 1000 micrometer.

8. The in-mold label of claim 7, wherein diameter of each micro-protrusion is from 1000 micrometer to 1600 micrometer.

9. A method for producing the in-mold label according to the claim 1, the method comprising:
providing a thermoplastic resin substrate;
applying a thermoplastic resin material (40) on surface of the thermoplastic resin substrate;
providing an embossing apparatus (42) with surface structure (421);
driving the embossing apparatus to perform a heating-embossing-cooling process, and form a plurality of interlaced and continuous-arranged micro-protrusions (401) on the heat-sealable resin layer, wherein the interlaced and continuous-arranged micro-protrusions are formed by various interlaced and continuous-arranged holes, by the embossing apparatus with the surface structure; and
forming a printed layer, the thermoplastic resin substrate, and the heat-sealable resin layer, which are combined to form the in-mold label, on the thermoplastic resin substrate.

10. The producing method of claim 9, wherein the process of providing the thermoplastic resin substrate further comprises:
driving an extrusion machine to perform an extrusion process, including a heating process;
driving a cooling-molding wheel apparatus to perform a cooling process;
driving a longitudinal stretching apparatus to perform a longitudinal stretching process;
driving a transverse stretching apparatus to perform a transverse stretching process; and
driving a corona-treatment apparatus to perform a corona-treatment process;
whereby, the above processes are performed to produce the in-mold label substrate.

11. The method of claim 9, wherein the hole has a depth of from 8 micrometer to 14 micrometer.

12. The method of claim 11, wherein spacing among the holes is from 10 micrometer to 1000 micrometer.

13. The method of claim 12, wherein diameter of each micro-protrusion is from 1000 micrometer to 1600 micrometer.

## Patentansprüche

1. Ein Blasformetikett, umfassend:
ein Substrat;
eine gedruckte Schicht, ausgebildet auf einer ersten Oberfläche des Substrats zur Angabe des gedruckten Inhalts;
eine Hitze-versiegelbare Schicht ausgebildet auf einer zweiten Oberfläche des Substrats (30), wobei die Hitze-versiegelbare Schicht eine Vielzahl von verflochtenen und fortlaufend angeordneten Mikroausbuchtungen (301) umfasst, wobei die Mikroausbuchtungen aus verschiedenen verflochtenen und fortlaufend angeordneten Löchern zur Bildung einer Vielzahl von Blasen-entleerenden Bahnen ausgebildet auf der Hitze-versiegelbaren Schicht durch einen Hitze-Prägung-Kühlungsprozess gebildet sind;
wobei, während das Blasformetikett mit der Oberfläche eines Gegenstandes verbunden wird, die verflochtenen und fortlaufend angeordneten Mikroausbuchtungen gebildet aus verschiedenen verflochtenen und fortlaufend angeordneten Löchern auf der Hitze-versiegelbaren Schicht effektiv die Blasen entleeren.

2. Das Blasformetikett nach Anspruch 1, wobei das Substrat eine Grundschicht aus thermoplastischem Harzmaterial ist.

3. Das Blasformetikett nach Anspruch 1, wobei die Hitze-versiegelbare Schicht aus einem thermoplastischen Harzmaterial besteht.

4. Das Blasformetikett nach Anspruch 3, wobei die verflochtenen und fortlaufend angeordneten Mikroausbuchtungen (401) durch den Hitze-Prägung-Kühlungsprozess, der eine Walze (42) mit Oberflächenstruktur (421) verwendet, gebildet sind.

5. Das Blasformetikett nach Anspruch 1, wobei das Blasformetikett eine Dicke von 60 Mikrometern bis 120 Mikrometer und eine Dichte von 0,5 g/cm³ bis 1,05 g/cm³ aufweist.

6. Das Blasformetikett nach Anspruch 1, wobei das Loch eine Tiefe von 8 Mikrometern bis 14 Mikrometern aufweist.

7. Das Blasformetikett nach Anspruch 6, wobei der Abstand zwischen den Löchern von 10 Mikrometer bis 1000 Mikrometer beträgt.

8. Das Blasformetikett nach Anspruch 7, wobei der Durchmesser jeder Mikroausbuchtung von 1000 Mikrometer bis 1600 Mikrometer beträgt.

9. Ein Verfahren zur Herstellung eines Blasformetiketts nach Anspruch 1, umfassend:
Bereitstellung eines thermoplastischen Harzsubstrates;
Aufbringen eines thermoplastischen Harzmateriales (40) auf der Oberfläche des thermoplastischen Harzsubstrates;
Fahren eines Prägeapparates (42) mit Oberflächenstruktur (421);
Betreiben des Prägeapparats, um einen Hitze-Prägung-Kühlungsprozess durchzuführen und um eine Vielzahl von verflochtenen und fortlaufend angeordneten Mikroausbuchtungen (401) auf der Hitze-versiegelbaren Harzschicht zu bilden, wobei die verflochtenen und fortlaufend angeordneten Mikroausbuchtungen durch verschiedene verflochtene und fortlaufend angeordnete Löcher, durch den Prägeapparat mit Oberflächenstruktur geformt sind; und
Formen einer gedruckten Schicht, eines thermoplastischen Harzsubstrates und einer Hitze-versiegelbaren Harzschicht, welche kombiniert werden, um das Blasformetikett auf dem thermoplastischen Harzsubstrat zu bilden.

10. Das Herstellungsverfahren nach Anspruch 9, wobei der Prozess das Bereitstellen des thermoplastischen Harzsubstrates ferner umfasst:
Betreiben einer Extrusionsmaschine, um einen Extrusionsprozess einschließlich eines Erhitzungsprozesses durchzuführen;
Betreiben eines kühlenden Formungsradapparates, um einen Kühlungsprozess durchzuführen;
Betreiben eines longitudinalen Dehnungsapparates, um einen longitudinalen Dehnungsprozess durchzuführen;
Betreiben eines transversalen Dehnungsapparates, um einen transversalen Dehnungsprozess durchzuführen; und
Betreiben eines Corona-Behandlungsapparates, um einen Corona-Behandlungsprozess durchzuführen;
wobei die obigen Prozesse durchgeführt werden, um das Substrat des Blasformetiketts herzustellen.

11. Das Verfahren nach Anspruch 9, wobei das Loch eine Tiefe von 8 Mikrometern bis 14 Mikrometer aufweist.

12. Das Verfahren nach Anspruch 11, wobei der Zwischenraum zwischen den Löchern von 10 Mikrometern bis 1000 Mikrometern beträgt.

13. Das Verfahren nach Anspruch 12, wobei der Durchmesser jeder Mikroausbuchtung von 1000 Mikrometern bis 1600 Mikrometern beträgt.

## Revendications

1. Étiquette dans le moule, comprenant :
un substrat ;
une couche imprimée, formée sur une première surface du substrat destinée à afficher un contenu imprimé ;
une couche thermosoudable, formée sur une seconde surface du substrat (30), dans laquelle la couche thermosoudable comprend une pluralité de micro-saillies entrelacées et agencées de manière continue (301), dans laquelle les micro-saillies sont formées par divers trous entrelacés et agencés de manière continue, pour former une pluralité de chemins d'élimination de cloques formés sur la couche thermosoudable grâce à un processus de chauffage-gaufrage-refroidissement ;
dans laquelle, tandis que l'étiquette dans le moule est combinée avec la surface d'un article, les micro-saillies entrelacées et agencées de manière continue formées par divers trous entrelacés et agencés de manière continue sur la couche thermosoudable, éliminent efficacement les cloques.

2. Étiquette dans le moule selon la revendication 1, dans laquelle le substrat est une couche de base réalisée dans un matériau de résine thermoplastique.

3. Étiquette dans le moule selon la revendication 1, dans laquelle la couche thermosoudable est réalisée dans un matériau de résine thermoplastique.

4. Étiquette dans le moule selon la revendication 3, dans laquelle les micro-saillies entrelacées et agencées de manière continue (401) sont formées grâce au processus de chauffage-gaufrage-refroidissement en utilisant un rouleau (42) avec une structure de surface (421).

5. Étiquette dans le moule selon la revendication 1, dans laquelle l'étiquette dans le moule présente une épaisseur de 60 micromètres à 120 micromètres, et une densité de 0,50 g/cm³ à 1,05 g/cm³.

6. Étiquette dans le moule selon la revendication 1, dans laquelle le trou présente une profondeur de 8 micromètres à 14 micromètres.

7. Étiquette dans le moule selon la revendication 6, dans laquelle l'espacement entre les trous est de 10 micromètres à 1 000 micromètres.

8. Étiquette dans le moule selon la revendication 7, dans laquelle le diamètre de chaque micro-saillie est de 1 000 micromètres à 1 600 micromètres.

9. Procédé de fabrication de l'étiquette dans le moule selon la revendication 1, le procédé comprenant :
la fourniture d'un substrat de résine thermoplastique ;
l'application d'un matériau de résine thermoplastique (40) sur la surface du substrat de résine thermoplastique ;
la fourniture d'un appareil de gaufrage (42) avec une structure de surface (421) ;
la commande de l'appareil de gaufrage pour exécuter un processus de chauffage-gaufrage-refroidissement, et former une pluralité de micro-saillies entrelacées et agencées de manière continue (401) sur la couche de résine thermosoudable, dans lequel les micro-saillies entrelacées et agencées de manière continue sont formées par divers trous entrelacés et agencés de manière continue, par l'appareil de gaufrage avec la structure de surface ; et
la formation d'une couche imprimée, du substrat en résine thermoplastique et de la couche de résine thermosoudable, qui sont combinés pour former l'étiquette dans le moule, sur le substrat de résine thermoplastique.

10. Procédé de fabrication selon la revendication 9, dans lequel le processus de fourniture du substrat en résine thermoplastique comprend en outre :
la commande d'une machine d'extrusion pour exécuter un processus d'extrusion, comprenant un processus de chauffage ;
la commande d'un appareil sur roues de refroidissement-moulage pour exécuter un processus de refroidissement ;
la commande d'un appareil d'étirage longitudinal pour exécuter un processus d'étirage longitudinal ;
la commande d'un appareil d'étirage transversal pour exécuter un processus d'étirage transversal ; et
la commande d'un appareil de traitement corona pour exécuter un processus de traitement corona ;
par lequel les processus ci-dessus sont exécutés pour fabriquer le substrat d'étiquette dans le moule.

11. Procédé selon la revendication 9, dans lequel le trou présente une profondeur de 8 micromètres à 14 micromètres.

12. Procédé selon la revendication 11, dans lequel l'espacement entre les trous est de 10 micromètres à 1 000 micromètres.

13. Procédé selon la revendication 12, dans lequel le diamètre de chaque micro-saillie est de 1 000 micromètres à 1 600 micromètres.
